**Europäisches Patentamt**

**European Patent Office**

**Office européen des brevets**

(19)

(11) Veröffentlichungsnummer: **0 006 106**
**B1**

(12) **EUROPÄISCHE PATENTSCHRIFT**

(45) Veröffentlichungstag der Patentschrift:
**04.11.81**

(21) Anmeldenummer: **79100478.1**

(22) Anmeldetag: **19.02.79**

(51) Int. Cl.³: **F 16 B 5/12**, B 60 R 13/06

(54) **Profilleiste aus Gummi oder Kunststoff.**

(30) Priorität: **12.06.78 DE 2825726**

(43) Veröffentlichungstag der Anmeldung:
**09.01.80 Patentblatt 80/1**

(45) Bekanntmachung des Hinweises auf die Patenterteilung:
**04.11.81 Patentblatt 81/44**

(84) Benannte Vertragsstaaten:
**FR GB IT NL SE**

(56) Entgegenhaltungen:
**DE-A-2 631 568**
**FR-A-2 366 476**
**US-A-3 167 856**

(73) Patentinhaber: **Gebr. Happich GmbH,**
**Postfach 10 02 49 Clausenbrücke 1,**
**D-5600 Wuppertal 1 (DE)**

(72) Erfinder: **Meissner, Wolfgang, Eickenstrasse 3,**
**D-5802 Wetter 4 (DE)**

BUNDESDRUCKEREI BERLIN

## Profilleiste aus Gummi oder Kunststoff

Die Erfindung betrifft eine Profilleiste aus Gummi oder Kunststoff, die ein im wesentlichen U-förmiges, einen Scheitelschenkel und zwei Seitenschenkel aufweisendes Querschnittsprofil mit einer darin eingelagerten metallischen Einlage besitzt, auf einen Halteflansch einer Fahrzeugkarosserie od. dgl. aufsetzbar ist und an zumindest einem Seitenschenkel mit einer innenseitig angeformten, sich durchlaufend in Längsrichtung der Profilleiste erstreckenden und sich an dem Halteflansch anlegenden Haltelippe ausgerüstet ist, die aus einem im Querschnitt gesehen einen Drehpunkt bildenden biegeelastischen Steg und einem sich daran anschließenden Kopfteil besteht, dessen dem Halteflansch zugewandte Anlagefläche konvex ist.

Bei einer bekannten Profilleiste der angegebenen Art (DE-A-2 631 568) weist die Haltelippe ein Kopfteil auf, das nach Fig. 8 dieser Druckschrift als ovale Rolle ausgebildet ist, deren Gelenk- bzw. Drehpunkt etwa am Ende des langen Durchmessers liegt. Der lange Durchmesser der ovalen Rolle ist im entlasteten Zustand etwa senkrecht zur Anlagefläche des Halteflansches ausgerichtet. Die Gestaltung und Anordnung der als ovale Rolle ausgebildeten Haltelippe wird den technischen Anforderungen in verschiedener Hinsicht nicht gerecht. So wird die Forderung, daß sich die Profilleiste leicht auf einen Halteflansch aufsetzen läßt, nur dann erfüllt, wenn der Halteflansch eine nur geringe Dicke besitzt und auf einen Bereich der ovalen Rolle auftrifft, der zwischen ihrem freien Ende bis maximal zu ihrem kleinen Durchmesser liegt, denn nur ein Auftreffen des Halteflansches auf diesen Bereich läßt es zu, daß die ovale Rolle in Richtung auf den Scheitelschenkel der Profilleiste ausschwenken kann. Bei dickeren Halteflanschen oder beim Auftreffen eines Halteflansches auf einen Bereich der Rolle, der zwischen dem kleinen Durchmesser und dem Drehpunkt liegt, ist ein Ausschwenken der ovalen Rolle und damit eine Montage der Profilleiste nicht möglich; zumindest würde die ovale Rolle erheblich auf Abscherung beansprucht werden. Die ovale Ausbildung der Rolle ergibt auch nur eine geringe Anlagefläche und bei bestimmten Verdrehungen Gleitflächen, so daß keine ausreichende Klemmwirkung zu erzielen ist.

Die Aufgabe der Erfindung besteht nun darin, eine Profilleiste der im Oberbegriff des Anspruchs 1 angegebenen und als bekannt vorausgesetzten Art insoweit zu verbessern, daß sie sich besonders leicht auf in weiten Grenzen unterschiedlich dicke Halteflansche aufsetzen läßt und daß sie besser gegen ein leichtes oder gar ungewolltes Abziehen vom Halteflansch gesichert ist.

Zur Lösung dieser Aufgabe ist erfindungsgemäß vorgesehen, daß die Anlagefläche, bezogen auf den Drehpunkt, spiralartig mit sich vergrößerndem Radius in Richtung zum Scheitelschenkel der Profilleiste ausgebildet ist.

Durch diese erfindungsgemäße Maßnahme wird das Aufsetzen der Profilleiste auf einen Halteflansch nicht, das Abziehen der Profilleiste vom Halteflansch hingegen beträchtlich erschwert. Der Kopfteil der Haltelippe kann beim Aufsetzen der Profilleiste auf den Halteflansch wegschwenken, wobei der Steg die Sollbiegestelle bzw. den Drehpunkt bildet. Beim Löseversuch wird der Kopfteil jedoch im entgegengesetzten Drehsinn verschwenkt, wobei sich mit zunehmendem Schwenkweg der Radiusvektor zwischen dem Drehpunkt und der jeweiligen Anlagestelle der Anlagefläche am Halteflansch und damit die Reibkraft am Halteflansch vergrößert. Erfindungsgemäß erfüllt somit die Haltelippe die Funktion eines selbsthemmenden Exzenters.

Vorzugsweise weist jeder Seitenschenkel eine angeformte Haltelippe auf, wobei die Stege der Haltelippen sich gegenüberliegen. Damit wird der erfindungsgemäße Effekt optimiert.

Eine zweckmäßige Weiterbildung der Erfindung besteht darin, daß zwischen dem Steg und dem der offenen Seite der Profilleiste zugelegenen Anfang der spiralkurvenartig verlaufenden Anlagefläche ein Anschlag angeformt ist, der gegen den die Haltelippe tragenden Seitenschenkel abstützbar ist. Ein Umklappen des Kopfteils wird auf diese Weise ausgeschlossen. Der Anschlag ist bevorzugt aus einer als Stützfläche dienenden Begrenzungsfläche des Kopfteils gebildet, die im entlasteten Zustand der Haltelippe vom Steg ausgehend etwa parallel zum Seitenschenkel verläuft und über eine Ausrundung in die Anlagefläche übergeht. Damit ist die Anlagefläche relativ weit bis an den Seitenschenkel herangezogen und damit sichergestellt, daß der Halteflansch auf sie auftrifft, auch dann, wenn das Aufsetzen der Profilleiste beispielsweise wegen Unachtsamkeit unter Verkantung erfolgt.

In weiterer Ausgestaltung der Erfindung kann der Kopfteil über zwei jeweils über eine Ausrundung in die Anlagefläche übergehende linear verlaufende Begrenzungsflächen verfügen, die einen Winkel von 70 bis 130 Grad, vorzugsweise etwa 100 Grad, einschließen. Damit ist die Anlagefläche des Kopfteils der Haltelippe, die ja nur jeweils bereichsweise mit dem jeweiligen Halteflansch in Kontaktberührung gelangt, relativ groß, so daß die Profilleiste auf in weiten Grenzen unterschiedlich dicke Halteflansche aufgesetzt werden kann.

Der Reibungswert läßt sich dadurch beeinflussen, daß die Anlagefläche eine reibungserhöhende Oberflächenstruktur und/oder Oberflächenbeschichtung aufweist. Es ist aber auch möglich, daß die Haltelippe in an sich bekannter Weise aus weicherem Werkstoff als die Profilleiste selber besteht.

Der Steg der bzw. jeder Haltelippe und somit der durch den Steg gebildete Drehpunkt ist zweckmäßigerweise vom offenen Ende der Profilleiste weiter als vom Scheitelschenkel entfernt an dem Seitenschenkel angeordnet, wobei das Abstandsverhältnis etwa 1 : 3 betragen kann. Dadurch wird eine leichte Montage erreicht und eine Scherbeanspruchung durch Verkanten vermieden.

Unter Bezugnahme auf die Zeichnung, die ein bevorzugtes Ausführungsbeispiel veranschaulicht, wird die Erfindung näher erläutert. Es zeigt

Fig. 1 einen Querschnitt durch die Profilleiste im Ruhezustand,

Fig. 2 die Profilleiste nach Fig. 1, auf einen relativ dünnen Halteflansch aufgesetzt und

Fig. 3 die Profilleiste nach Fig. 1, auf einen relativ dicken Halteflansch aufgesetzt.

Die Profilleiste besitzt einen etwa U-förmigen Querschnitt und weist einen Scheitelschenkel 1 und zwei Seitenschenkel 2 auf. Sie ist aus relativ steifem Kunststoffmaterial oder Gummi gebildet und durch eine eingebettete metallische Einlage 3 stabilisiert. An der Innenseite der Seitenschenkel 2 ist jeweils eine Haltelippe 4 angeformt. Jede Haltelippe 4 besteht aus einem am Seitenschenkel 2 angeformten Steg 5, an dem sich ein verdickter Kopfteil 6 anschließt. Da der Steg 5 aus einem biegeelastischen Werkstoff besteht, ist der Kopfteil 6 in Doppelpfeilrichtung schwenkbeweglich gelagert, wobei mit 7 der Drehpunkt bezeichnet ist. Die dem Steg 5 abgewandte Seite des Kopfteils 6 ist konvex gestaltet und als spiralkurvenartig in Richtung zum Scheitelschenkel 1 ansteigend verlaufende Anlagefläche 8 ausgebildet. Das Maß a vom Drehpunkt 7 zum Anfang der spiralkurvenartigen Anlagefläche 8 ist damit wesentlich kleiner als das Maß b zwischen dem Ende der Anlagefläche 8 und dem Drehpunkt 7.

Die Anlagefläche 8 geht beidseitig über einen Radius jeweils in eine linear verlaufende Begrenzungsfläche 9 und 10 über, die unmittelbar in dem Steg 5 auslaufen. Die Begrenzungsfläche 10 dient als sich an dem Seitenschenkel 2 abstützender Anschlag bzw. als Stützfläche und verläuft etwa parallel zur Innenseite des Seitenschenkels 2. Die Stützflächen 9 und 10 schließen einen Winkel von etwa 100 Grad ein.

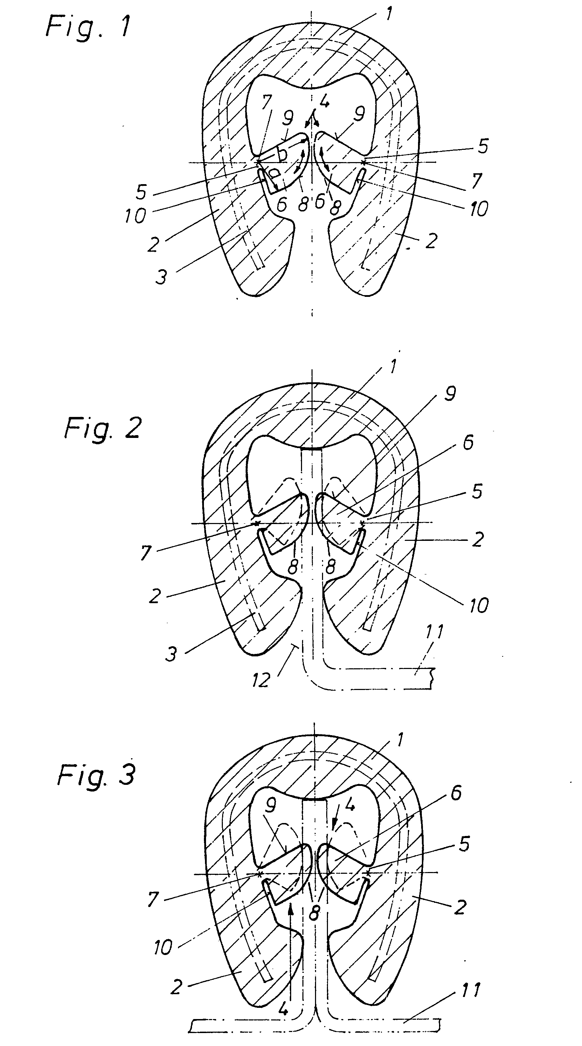

Die Haltefunktion der Haltelippen 4 ist aus den Fig. 2 und 3 ersichtlich. In Fig. 2 ist die Profilleiste auf einen relativ dünnen Halteflansch 11 aufgesetzt. Durch das Aufsetzen sind die Kopfteile 6 der Haltelippen 4 aus der in starker Strichführung dargestellten Ruhelage in die gestrichelt dargestellte Haltelage verschwenkt worden. In dieser Haltelage der Dichtlippen 4 ist die Profilleiste gegen ein ungewolltes Abziehen vom Halteflansch 11 gesichert, und zwar durch die exzentrische Ausbildung und Lagerung des Kopfteils 6. Der Kontaktbereich zwischen den Anlageflächen 8 und dem Halteflansch 11 liegt aufgrund der besonderen Ausgestaltung der Kopfteile 6 und der Anordnung der Drehpunkte 7 oberhalb der durch die Drehpunkte 7 definierten Horizontalebene. Der Versuch, die Profilleiste vom Halteflansch 11 abzuziehen, würde somit dazu führen, die Kopfteile 6 in Richtung zum Einführmaul 12 der Profilleiste ausschwenken zu lassen, wodurch jedoch die Klemmwirkung und Reibkraft am Halteflansch zwangsweise vergrößert wird, denn die Steigung der spiralartigen Kurve und der Reibungsbeiwert der Anlagefläche 8 ist immer so gewählt, daß eine Selbsthemmung gewährleistet ist. Bei besonders großem Kraftaufwand stützt sich die als Anschlag dienende Begrenzungsfläche 10 gegen den Seitenschenkel 2 ab, so daß auch ein Umklappen des Kopfteils 6 nicht möglich ist.

Die Fig. 3, die im wesentlichen der Darstellung nach Fig. 2 entspricht, soll verdeutlichen, daß durch die besondere Ausbildung und Anordnung der Haltelippen 4 besonders große Toleranzen in der Dicke der Halteflansche 11 überbrückbar sind.

**Patentansprüche**

1. Profilleiste aus Gummi oder Kunststoff, die ein im wesentlichen U-förmiges, einen Scheitelschenkel (1) und zwei Seitenschenkel (2) aufweisendes Querschnittsprofil mit einer darin eingelagerten metallischen Einlage (3) besitzt, auf einen Halteflansch (11) einer Fahrzeugkarosserie od. dgl. aufsetzbar ist und an zumindest einem Seitenschenkel (2) mit einer innenseitig angeformten, sich durchlaufend in Längsrichtung der Profilleiste erstreckenden und sich an dem Halteflansch (11) anlegenden Haltelippe (4) ausgerüstet ist, die aus einem im Querschnitt gesehen einen Drehpunkt (7) bildenden biegeelastischen Steg (5) und einem sich daran anschließenden Kopfteil (6) besteht, dessen dem Halteflansch (11) zugewandte Anlagefläche (8) konvex ist, dadurch gekennzeichnet, daß die Anlagefläche (8) bezogen auf den Drehpunkt (7) spiralartig mit sich vergrößerndem Radius in Richtung zum Scheitelschenkel (1) der Profilleiste ausgebildet ist.

2. Profilleiste nach Patentanspruch 1, dadurch gekennzeichnet, daß jeder Seitenschenkel (2) eine angeformte Haltelippe (4) aufweist, wobei die Stege (5) der Haltelippen (4) sich gegenüberliegen.

3. Profilleiste nach Patenanspruch 1 oder 2, dadurch gekennzeichnet, daß zwischen dem Steg (5) und dem der offenen Seite der Profilleiste zugelegenen Anfang der spiralkurvenartig verlaufenden Anlagefläche (8) ein Anschlag angeformt ist, der gegen den die Haltelippe (4) tragenden Seitenschenkel (2) abstützbar ist.

4. Profilleiste nach Patentanspruch 3, dadurch gekennzeichnet, daß der Anschlag aus einer als Stützfläche dienenden Begrenzungsfläche (10) des Kopfteils (6) gebildet ist, die im entlasteten Zustand der Haltelippe (4) vom Steg (5) ausgehend, etwa parallel zum Seitenschenkel (2) verläuft und über eine Ausrundung in die Anlagefläche (8) übergeht.

5. Profilleiste nach einem oder mehreren der Patentansprüche 1 bis 4, dadurch gekennzeichnet, daß der Kopfteil (6) über zwei jeweils über eine Ausrundung in die Anlagefläche (8) übergehende, linear verlaufende Begrenzungsflächen (9, 10) verfügt, die einen Winkel von 70 bis 130 Grad, vorzugsweise etwa 100 Grad, einschließen.

6. Profilleiste nach einem oder mehreren der Patentansprüche 1 bis 5, dadurch gekennzeichnet, daß die Anlagefläche (8) eine reibungserhöhende Oberflächenstruktur und/oder Oberflächenbeschichtung aufweist.

7. Profilleiste nach einem oder mehreren der Patentansprüche 1 bis 6, dadurch gekennzeichnet, daß die Haltelippe (4) in an sich bekannter Weise aus weicherem Werkstoff als die Profilleiste selber besteht.

8. Profilleiste nach einem oder mehreren der Patentansprüche 1 bis 7, dadurch gekennzeichnet, daß der Steg (5) der bzw. jeder Haltelippe (4) und somit der durch den Steg (5) gebildete Drehpunkt (7) vom offenen Ende der Profilleiste weiter als vom Scheitelschenkel (1) entfernt an dem Seitenschenkel (2) angeordnet ist, wobei das Abstandsverhältnis etwa 1 : 3 beträgt.

## Claims

1. A beading of rubber or plastics material having a middle portion (1) and two side portions (2) forming a substantially U-shaped cross-sectional profile with a metallic insert (3) embedded in it, the beading being mountable on a retaining flange (11) of a vehicle body or the like and being provided, on at least one side portion (2), with a retaining lip (4) which is formed integrally on the inside of the beading and extends continuously in the longitudinal direction of the beading so as to bear against the retaining flange (11), which retaining lip comprises a resilient neck portion (5) forming a pivot point (7) as seen in cross-section, and a head portion (6) which adjoins the neck portion and has a bearing surface (8) of convex shape facing the retaining flange (11), characterized in that, in relation to the pivot point (7), the bearing surface (8) is formed in the manner of a spiral with a radius which increases towards the middle portion (1) of the beading.

2. A beading according to claim 1, characterized in that each side portion (2) has an integral retaining lip (4), the neck portions (5) of the retaining lips (4) being disposed opposite each other.

3. A beading according to claim 1 or claim 2, characterized in that a stop is formed integrally between the neck portion (5) and the beginning of the spirally-extending bearing surface (8) which lies towards the open side of the beading, which stop can bear against the side portion (2) carrying the retaining lip (4).

4. A beading according to claim 3, characterized in that the stop is formed by a boundary surface (10) of the head portion (6), which surface acts as a support face and, in the unloaded condition of the retaining lip (4), starts from the neck portion (5), extends substantially parallel with the side portion (2), and joins the bearing surface (8) by way of a rounded portion.

5. A beading according to any one or more of claims 1 to 4, characterized in that the head portion (6) has two linear boundary surfaces (9, 10) each of which joins the bearing surface (8) by way of a rounded portion and which enclose an angle of from 70 to 130 degrees, preferably approximately 100 degrees.

6. A beading according to any one or more of claims 1 to 5, characterized in that the bearing surface (8) has a friction-increasing surface structure and/or surface coating.

7. A beading according to any one or more of claims 1 to 7, characterized in that the retaining lip (4) is in known manner, of softer material than the beading itself.

8. A beading according to any one or more of claims 1 to 7, characterized in that the neck portion of the or each retaining lip (4) and, therefore, the pivot point (7) formed by the neck portion (5) is arranged on the side portion (2) at a point more distant from the open end of the beading than from the middle portion (1), the spacing ratio being approximately 1 : 3.

## Revendications

1. Baguette profilée en caoutchouc ou matière synthétique qui présente un profil à section transversale sensiblement en forme de U avec armature métallique (3) incorporée, comprenant une branche de sommet (1) et deux branches latérales (2), ladite baguette pouvant être posée sur une arête de retenue (11) de la carrosserie d'un véhicule ou analogue et étant équipée d'une lèvre de serrage (4) qui est formée solidairement du côté intérieur tout au moins sur une branche latérale (2), s'étendant tout du long dans la direction longitudinale de la baguette profilée et s'appliquant contre ladite bride (11), cette lèvre étant constituée par une âme (5) à flexion élastique, procurant, vue en section transversale, un centre (7) de rotation, et par une tête (6) qui s'y raccorde, dont la surface d'appui (8) tournée vers la bride de retenue (11) est convexe, caractérisée en ce que la surface d'appui (8), par rapport au centre de rotation (7), est constituée avec une forme de spirale et avec un rayon de spirale qui grandit dans la direction du bras de sommet (1) de la baguette profilée.

2. Baguette profilée selon revendication 1, caractérisée en ce que chaque branche latérale (2) présente une lèvre de serrage (4) formée solidairement, les âmes (5) des deux lèvres de serrage (4) se trouvant en regard.

3. Baguette profilée selon revendication 1 ou 2, caractérisée en ce qu'une butée est formée solidairement entre la nervure (5) et le début, située vers le côté ouvert de la baguette profilée, de la surface d'appui (8) de forme spiralée, qui peut s'appuyer contre la branche latérale (2) portant la lèvre d'arrêt (4).

4. Baguette profilée selon revendication 3, caractérisée en ce que la butée est formée par une face latérale (10), servant de surface d'appui, de la tête (6), laquelle est dirigée, en partant à l'état non sollicité de la lèvre d'arrêt (4) de l'âme (5), sensiblement parallèlement à la branche latérale (2) et se transforme par un arrondi pour former la surface d'appui (8).

5. Baguette profilée selon l'une des revendications 1 à 4, caractérisée en ce que la tête (6) est pourvue de deux faces latérales (9, 10) planes, se transformant chacune par un arrondi pour former la surface d'appui (8), ces faces planes faisant entre elles un angle de 70 à 130 degrés, et de préférence égal à 100 degrés environ.

6. Baguette profilée selon l'une des revendications 1 à 5, caractérisée en ce que la surface d'appui (8) présente une structure superficielle augmentant le frottement et/ou est dotée d'un revêtement de surface.

7. Baguette profilée selon l'une des revendications 1 à 6, caractérisée en ce que la lèvre de serrage (4) est elle-même constituée, de façon en soi connue, par un matériau plus tendre que celui de la baguette.

8. Baguette profilée selon l'une des revendications 1 à 7, caractérisée en ce que l'âme (5) de la ou de chaque lèvre (4), incluant le centre de rotation (7) procuré par l'âme (5), est plus éloignée de l'extrémité ouverte de la baguette profilée que de la branche de sommet (1), dans le bras latéral (2), le rapport d'écartement étant voisin de 1 : 3.

Fig. 1

Fig. 2

Fig. 3